# EUROPÄISCHE PATENTSCHRIFT

(11) **EP 0 847 150 B1**
(45) Veröffentlichungstag und Bekanntmachung des Hinweises auf die Patenterteilung: **19.05.1999**
(21) Anmeldenummer: 97118568.1
(22) Anmeldetag: 24.10.1997
(51) Int. Cl.: H04B 10/105, G02B 7/182

(54) **Ausrichtvorrichtung zum Ausrichten eines optischen Sendestrahls auf einen optischen Empfangsstrahl**
Alignment device to align an optical emitted beam with an optical received beam
Dispositif d'alignement d'une onde optique émise et d'une onde optique reçue

(30) Priorität: 06.12.1996 CH 2988/96
(43) Veröffentlichungstag der Anmeldung: 10.06.1998
(73) Patentinhaber: OERLIKON CONTRAVES AG, 8050 Zürich (CH)
(72) Erfinder: Czichy, Reinhard Hanno, Dr. rer. nat., 9034 Eggersriet (CH); Fischer, Edgar, Dr. Ing., 8555 Müllheim Dorf (CH)
(74) Vertreter: Hotz, Klaus, Dipl.-El.-Ing./ETH

(56) Entgegenhaltungen:
- FR-A- 2 690 532
- US-A- 4 451 729
- US-A- 5 227 921
- ENGLISCH ET AL: "Ultra-lightweight quartzglass mirror blanks" REFLECTIVE OPTICS II, 27. - 29.März 1989, ORLANDO, US, Seiten 190-203, XP000374180
- BAISTER ET AL: "SOUT optical intersatellite communication terminal elegant breadboard" IEE PROCEEDINGS J OPTOELECTRONICS, Bd. 142, Nr. 6, Dezember 1995, STEVENAGE GB, Seiten 279-287, XP000551448
- VICTOR A SKORMIN ET AL: "MATHEMATICAL MODELLING AND SIMULATION ANALYSIS OF A POINTING, ACQUISITION, AND TRACKING SYSTEM FOR LASER-BASED INTERSATELLITE COMMUNICATION" OPTICAL ENGINEERING, Bd. 32, Nr. 11, 1.November 1993, Seiten 2749-2763, XP000413680

## Beschreibung

Die Erfindung betrifft eine Ausrichtvorrichtung zum Ausrichten eines optischen Sendestrahls auf einen optischen Empfangsstrahl nach dem Oberbegriff des Patentanspruchs **1** und geht aus von FR-A-2 690 532.

Ausrichtvorrichtungen dieser Art werden vorzugsweise als Bestandteile von Terminals verwendet, die zur gegenseitigen Datenübermittlung mittels optischer Freiraumverbindungen im Weltraum eingesetzt werden. Die Ausrichtvorrichtungen dienen dazu, einen von einem Terminal ausgehenden Sendestrahl auf einen von einem Gegenterminal ausgehenden und vom ersten Terminal empfangenen Strahl auszurichten. Der Sendestrahl des Gegenterminals ist dabei der Empfangsstrahl des ersten Terminals und umgekehrt, da die beiden Terminals im Prinzip die gleichen Funktionen ausüben und somit im wesentlichen auch gleich ausgebildet sind. An dieser Stelle sei angemerkt, dass es sich bei den Terminals auch um erdgebundene Einrichtungen handeln kann, jedoch sind die durch die vorliegende Erfindung erzielten Vorteile besonders bei Terminals in der Art von Weltraumsatelliten-Terminals bedeutsam.

Zur Übermittlung von Daten zwischen zwei Terminals sind die erwähnten optischen Freiraumverbindungen aus verschiedenen Gründen vorteilhafter als die zum genannten Zweck ebenfalls einsetzbaren Mikrowellen-Richtfunkverbindungen.

Insbesondere lassen sich mit optischen Freiraumverbindungen verhältnismässig massearme Empfangs- und Sendevorrichtungen realisieren. Dank der verhältnismässig kurzen Wellenlänge von Licht lässt sich nämlich ein optischer Strahl mit einer relativ klein dimensionierten Optik in einen kleinen Raumwinkel emittieren. Durch den auf diese Weise erzielten Antennengewinn lässt sich auch mit niedriger Sendeleistung eine hohe Datenrate übertragen. Demgegenüber weisen die für Mikrowellen--Richtfunkverbindungen benötigten Richtantennen vergleichsweise grosse Abmessungen und Massen auf, was insbesondere bei Satellitenterminals einen bedeutenden Nachteil darstellt.

Die vorteilhafte Möglichkeit, sich einer klein dimensionierten und damit massearmen Optik zu bedienen, beruht auf der guten Bündelbarkeit der optischen Strahlen, die die Bündelbarkeit der Mikrowellen übertrifft.

Die Anforderungen an die Genauigkeit der Ausrichtung von Sende- und Empfangsstrahl sind infolge der starken Bündelung der Strahlen bzw. ihrer Abstrahlung in einem kleinen Raumwinkelbereich einerseits hoch und anderseits nicht leicht zu erfüllen. Dies manifestiert sich schon beim Aufbau einer Verbindung zwischen zwei Satellitenterminals, die ja durch die Terminals selbst durchgeführt werden muss. Auch nach dem Aufbau einer Verbindung erfordert die gute Bündelung des optischen Sendestrahls eine in jedem Moment entsprechend genaue Ausrichtung der jeweiligen Sende- und Empfangsstrahlen bzw. eine entsprechende Nachführung der zum Senden und Empfangen der Strahlen benützten Einrichtungen.

Eine zusätzliche Schwierigkeit liegt darin, dass das Nachführen nicht nur verhältnismässig kontinuierliche Bewegungen erfordert sondern dass zur Kompensation von mechanischen Schwingungen, die in einem relativ breiten Frequenzbereich auftreten und die von einem Terminalträger bzw. Satelliten verursacht werden, die Ausrichtvorrichtung ebenfalls in der Lage sein muss, entsprechende hochfrequente kompensatorische Schwingungen durchzuführen. Das Terminal ist auf einer Trägerplattform des Satelliten montiert; dieser bewegt sich frei im Weltraum und ist in keiner Weise abgestützt, wobei er nicht nur mit keinem zusätzlichen körperlichen Element in Verbindung ist sondern auch nicht von einer Atmosphäre umgeben ist. Etwa auftretende mechanische Schwingungen des Satelliten übertragen sich daher nicht - wie es bei terrestrischen Einrichtungen üblich ist, auf die Umgebung. Dadurch besteht die Gefahr, dass der Satellit und damit natürlich das Terminal, in mechanische Schwingungen versetzt wird, und zwar durch Erschütterungen, die zum Beispiel durch Raketentriebwerke, die zwecks Bahnänderungen und Bahnkorrekturen in Betrieb genommen werden, und durch bewegte Teile wie Stabilisierungsvorichtungen induziert werden. Solche mechanische Schwingungen übertragen sich natürlich auf das Terminal und damit auf alle im Terminal angeordneten Bauteile, also auch auf die zur optischen Datenübertragung vorgesehenen Bauteile, wodurch eine korrekte Ausrichtung des Sendestrahls bzw. die Einhaltung der Empfangsrichtung beeinträchtigt werden kann, was eine jeweilige Nachausrichtung erfordert. Obwohl dieses Problem im Weltraum generell auftritt, wirkt es sich bei der Datenübertragung mittels optischen Strahlen infolge von deren starker Bündelung besonders gravierend aus.

In der Gesamtheit der Ausrichtvorgänge gibt es mehrere unterschiedliche Teilvorgänge. Als erstes muss beim Aufbau einer Verbindung, also vor dem Beginn der Datenübertragung, entweder ein vom Gegenterminal emittierter, stark gebündelte Suchstrahl, der unter Umständen einen relativ grossen Raumwinkel ausleuchtet, detektiert werden, oder es müssen geeignete natürliche Lichtquellen, also beispielsweise Stembilder, detektiert werden, die die hochgenaue Bestimmung der eigenen Ausrichtung im Raum erlauben. Als zweites muss, ebenfalls vor dem Beginn der Datenübertragung, eine genaue Einstellung des Sendestrahls auf den Suchstrahl bzw. relativ zur mittels der erwähnten Lichtquellen bestimmten Raumrichtung erfolgen. Als drittes muss während der Datenübertragung eine permanente Nachführung der Ausrichtung erfolgen, um fehlerhafte Abweichungen von der hochpräzisen Ausrichtung, die verschiedene Ursachen haben können, zu kompensieren.

Im weiteren muss im allgemeinen bei der Ausrichtung eine Relativbewegung zwischen dem Terminal und einem Gegenterminal berücksichtigt werden. Bisher wurde stets davon ausgegangen, dass keine Relativbewegung zwischen dem Terminal und dem Gegenterminal stattfindet. In diesem Fall ist das Ziel der Ausrichtung darauf beschränkt, den Sendestrahl genau auf den Empfangsstrahl auszurichten. Falls aber zwischen dem Terminal und dem Gegenterminal eine Relativbewegung stattfindet, so muss die Richtung des Sendestrahls geringfügig von der Empfangsrichtung abweichen, das heisst es muss die Einhaltung eines Vorhaltewinkels in die Ausrichtung einbezogen werden. Auf die Realisierung des Vorhaltewinkels kann dann verzichtet werden, wenn der Öffnungswinkel des Sendestrahls grösser ist als der notwendige Vorhaltewinkel. In diesem Fall wird der Verzicht mit einem erhöhten Leistungsbedarf des Sendelasers bei gleicher Leistungsreserve erkauft.

Die Anforderungen, die an die Ausrichtbarkeit gestellt werden, sind demzufolge sehr breit; einerseits muss eine Bewegung über einen grossen Raumwinkel, etwa im Bereich einer Hemisphäre oder ggfs mehr, stattfinden können, um auch bei ungünstigster Konstellation einen Empfangsstrahl überhaupt zu detektieren; anderseits muss eine sehr rasche Bewegung möglich sein, um beim Nachführen auch hochfrequente Schwingungen des Empfangsstrahls zu kompensieren.

Da offensichtlich eine effiziente Vorrichtung zum Nachführen des Sendestrahls zwecks Kompensation hochfrequenter Schwingungen aus dynamischen und energetischen Gründen nur eine minimale zu bewegende Masse aufweisen sollte, die Gesamtmasse der Ausrichtvorrichtung aber nicht beliebig minimalisiert werden kann, wurde bei einer Vorrichtung der eingangs genannten Art, die in der **FR-A1-2 690 532** beschrieben ist, eine Aufgabenteilung und damit auch eine Aufteilung der Ausrichtvorrichtung in zwei Teilvorrichtungen vorgesehen, welche zur Erfüllung der beiden genannten Anforderungen vorgesehen sind. Eine erste Teilvorrichtung, die massemässig den grössten Teil der gesamten Ausrichtvorrichtung beinhaltet und als Grobausrichtvorrichtung bezeichnet wird, erlaubt eine Bewegung über einen grossen Raumwinkel, bis in den Bereich einer Hemisphäre, jedoch ohne die Möglichkeit, hochfrequente mechanische Schwingungen durchzuführen, so dass mit dieser Grobausrichtvorrichtung keine Kompensation von hochfrequenten mechanischen Schwingungen des Terminals bzw. des Satelliten durchgeführt werden kann; die vorbekannte Grobausrichtvorrichtung ist periskopartig ausgebildet und weist zwei Spiegel auf, wobei der Sendestrahl nacheinander am ersten und am zweiten Spiegel reflektiert wird, bevor er emittiert wird. Die Richtung des Sendestrahls wird letztlich durch die Stellung des zweiten Spiegels bestimmt, der relativ zum ersten Spiegel um eine zweite Achse drehbar ist, während der erste Spiegel zusammen mit dem zweiten Spiegel um eine erste Achse drehbar ist, wobei die beiden Achsen orthogonal zueinander stehen. Eine zweite Teilvorrichtung, die massemässig nur einen sehr kleinen Teil der gesamten Ausrichtvorrichtung umfassen sollte und als Feinausrichtvorrichtung bezeichnet wird, ist auf der ersten Teilvorrichtung, also der Grobausrichtvorrichtung, angeordnet und bewegt sich solidarisch mit der letzteren; zusätzlich kann sich die Feinausrichtvorrichtung relativ zur Grobausrichtvorrichtung bewegen, und zwar mit hoher mechanischer Frequenz jedoch nur innerhalb eines sehr limitierten Raumwinkels.

Ein grosser Nachteil der durch die erwähnte **FR-A1-2 690 532** beschriebenen Ausrichtvorrichtung ist darin zu sehen, dass ihre gesamte Masse hoch ist, wobei insbesondere die durch die Feinausrichtvorrichtung bewegbare Masse, obwohl sie nur eine der Spiegeleinrichtungen umfasst, für eine effiziente Nachführung zu hoch ist.

Es ist deshalb eine Aufgabe der Erfindung, die vorbekannte Ausrichtvorrichtung gemäss der **FR-A1-2 690 532** durch geeignete Massnahmen so zu verbessem, dass sie leichter wird.

Diese Aufgabe wird erfindungsgemäss durch die Merkmale des kennzeichnenden Teils des Patentanspruchs **1** gelöst.

Mindestens der kippbare Spiegel ist also erfindungsgemäss ein massereduzierter Spiegel, der so leicht ist, dass die erforderlichen hochfrequenten mechanischen kompensatorischen Schwingungen problemlos realisiert werden können.

Zwar sind massereduzierte Spiegel an sich bekannt, so aus der **US-A-5,227,921** und aus der Publikation **'Ultra-Lightweight Quartzglass Mirror Blanks'** von **W.Englisch und R. Takke**, publiziert in REFLECTIVE OPTICS II, Orlando/USA. Die **US-A-5,227,921** beschreibt eine Spiegeleinrichtung mit einem Substrat, das eine Vielzahl von parallelen Rippen aufweist, wodurch sein Gewicht reduziert werden soll. Dadurch erhält man aber nur in einer Richtung, nämlich in Richtung der Rippen, eine hinreichende Deformationsresistenz. Dies spielt dann keine Rolle, wenn ein Doppelspiegel verwendet werden muss, da dann der zweite Spiegel so am ersten Spiegel befestigt werden kann, dass seine Rippen quer zu den Rippen des ersten Spiegels verlaufen. Doch selbst in diesem Fall eignet sich diese Konstruktion nur für rechteckige Spiegel, und eine Anpassung der Leichtigkeit bzw. Festigkeit an die jeweiligen Bedürfnisse ist nicht möglich, im Gegensatz zum Spiegel gemäss der Erfindung. Der Spiegel gemäss **W.Englisch** und **R. Takke** besteht aus einer Vielzahl von zusammengesetzten Segmenten und ist in seinem Aufbau kompliziert.

Eine bessere Anordnung wird durch die Erfindung vorgeschlagen. Zur Gewichtsreduktion des Spiegels sind nämlich erfindungsgemäss an seiner Rückseite, das heisst an der der spiegelnden Schicht gegenüberliegenden Fläche des plattenförmigen Substrates, Ausnehmungen angeordnet, die sich über nahezu die gesamte Plattendicke erstrecken. Diese Ausnehmungen sind so über die gesamte Fläche verteilt, dass zwischen den Ausnehmungen ausnehmungsfreie Zonen entstehen, die so angeordnet sind, dass sie gewissermassen eine Trägerstruktur bilden. Ein zusätzlicher Vorteil bei der Verwendung des massereduzierten Spiegels ist darin zu sehen, dass nicht nur der Spiegel selbst sondern auch die Einrichtungen zur Befestigung des Spiegels und zu seiner Bewegung massereduziert ausgebildet werden können, so dass die gesamte Feinausrichtvorrichtung aufgrund ihrer geringen Masse ihre Funktion optimal erfüllen kann.

Die Feineinstellbarkeit beruht wie schon erwähnt darauf, dass mindestens einer der Spiegel, im allgemeinen der erste bzw. Azimuthspiegel, zweiachsig kippbar gelagert ist, so dass er relativ zu seiner Mittelnormalen kippbar ist, wobei die Lagerung vorzugsweise eine kardanische ist. Zwar ist die Verwendung einer kardanischen Lagerung für den Azimuthspiegel aus der **FR-A1-2 690 532** bekannt. Infolge der Verwendung des neuen, gewichtsreduzierten Spiegels ist es aber möglich, eine entsprechend verbesserte kardanische Lagerung vorzusehen. Diese ist massearm und kompakt ausgebildet und weist Bestandteile auf, die in ihrer Fertigung einfach und daher preisgünstig sind. Zur Bewegung des Azimuthspiegels ist, wie beim Stand der Technik gemäss der **FR-A1-2 690 532**, eine Aktuatorvorrichtung vorgesehen. Die Verwendung des massereduzierten Spiegels erlaubt eine vorteilhafte, gewichtssparende Ausbildung auch dieser Aktuatorvorrichtung mit nur zwei Aktuatoren, das heisst mit je einem Aktuator für die Kippung um zwei orthogonale Kippachsen. Allerdings hat auch eine Aktuatorvorrichtung in der Art eines Kalottenmotors mit insgesamt vier Aktuatoren, nämlich mit zwei Aktuatoren pro Kippachse, Vorteile infolge der dadurch möglichen doppelsymmetrischen Anordnung.

Wenn auch die Ausrichtvorrichtung im Prinzip so konzipiert ist, dass sie zur Ausrichtung innerhalb eines Raumwinkels von mindestens einer Hemisphäre verwendet werden kann, so lässt sie sich auch so ausbilden, dass nur kleinere Raumwinkel erfassbar sind; dies hat insbesondere den Vorteil, dass keine Drehungen um einen vollen Kreis oder aus praktischen Gründen sogar um mehr als 360° stattfinden müssen.

Es empfiehlt sich, nicht nur den kippbaren Spiegel sondern auch den anderen Spiegel massereduziert auszubilden.

Vorzugsweise ist die Ausrichtvorrichtung so ausgelegt, dass der erste Spiegel relativ zur ersten Achse kippbar und der zweite Spiegel relativ zur zweiten Achse fest angeordnet sind, obwohl auch eine umgekehrte Anordnung oder die Anordnung von zwei kippbaren Spiegeln denkbar ist. Dadurch, dass der erste Spiegel kippbar ist, erhält man offensichtliche festigkeitsmässige und dynamische Vorteile; eine massereduzierte Ausbildung des zweiten Spiegels empfiehlt sich bei einer solchen Anordnung besonders.

Wenn auch die Masseverminderung der Feineinstellvorrichtung besonders wichtig ist, da sie nur dadurch ihre Aufgabe im Hinblick auf die Nachführung bei hochfrequenten mechanischen Schwingungen erfüllen kann, so wird doch grundsätzlich eine möglichst geringe Masse für jedes der konstruktiven Element der Ausrichtvorrichtung angestrebt. Die Antriebsvorrichtung der Grobeinstellvorrichtung, welche einen ersten Motor für die Azimuthachse und einen zweiten Motor für die Elevationsachse umfasst, erfolgt deshalb schon beim Stand der Technik wie er durch die mehrfach erwähnte französische Patentanmeldung bekannt ist, in gewichtssparender Weise, indem auf ein Getriebe verzichtet und die Motoren direkt an den jeweiligen Achsen angeordnet werden. Es muss aber als wesentlicher Nachteil der vorbekannten Ausrichtvorrichtung betrachtet werden, dass als Motoren Schrittmotoren ausgewählt wurden, welche nur Bewegungen in inkrementalen Schritten jedoch keine kontinuierlichen Bewegungen ermöglichen; letztere sind vor allem deshalb vorzuziehen, weil sie eine bessere Regelung erlauben. Zwar würde die Möglichkeit bestehen, Schrittmotoren zu verwenden, die in ihrer Funktion kontinuierlich wirkenden Motoren sehr nahe kommen, doch sind derart adaptierte Schrittmotoren in apparativer Hinsicht komplex und werden daher geme vermieden. Lösungen mit Getrieben erfordern hochpräzise und damit teure Konstruktionen. Besonders kritisch sind hierbei das Getriebespiel und die Gefahr einer Kaltverschweissung bei ungeeigneter Materialwahl. Aus diesem Grunde werden für die Ausrichtvorrichtung nach der Erfindung vorzugsweise drehmomentkonstante Motoren vorgesehen, die direkt an den entsprechenden Achsen angeordnet sind. Solche Motoren erlauben kontinuierliche und genaue Bewegungen, sind aber dennoch einfach, preisgünstig und leicht.

Ein Problem, auf welches bisher nicht eingegangen wurde, ist die Notwendigkeit, alle konstruktiven Elemente der Ausrichtvorrichtung so auszulegen, dass sie sich in gebrauchstauglichem Zustand befinden, wenn sie auf ihrer Umlaufbahn ankommen, dass sie also nicht während ihrer Beförderung durch eine Trägerrakete, und zwar insbesondere während der Startphase der Trägerrakete infolge hoher auftretender Trägheitskräfte, beschädigt werden. Um solche Schäden, die als Transportschäden betrachtet werden können, zu vermeiden, wurden bisher Verriegelungsvorrichtungen für die bewegten Teile der Ausrichtvorrichtung vorgesehen, wodurch man die Überbeanspruchung der bewegbaren Elementen während der erwähnten kritischen Startphase zu vermeiden suchte. Solche Lösungen sind aber aus verschiedenen Gründen nicht befriedigend. Erstens bedeutet jede Verriegelungsvorrichtung eine Vergrösserung der Masse, was, wie bereits mehrfach erwähnt, unerwünscht ist, wobei es besonders unangenehm ist, dass eine derartige Erhöhung der Masse nicht zu einer permanent nutzbaren Verbesserung des Terminals führt sondern durch eine Vorrichtung verursacht wird, die nur sehr kurzzeitig benutzt wird. Zweitens besteht stets die Gefahr, dass nach dem Erreichen der Umlaufbahn die Verriegelungsvorrichtungen sich nicht in der geplanten Weise lösen lassen sondern blockiert bleiben, so dass die Ausrichtvorrichtung von Beginn an nicht gebrauchsfähig ist. Drittens hat insbesondere bei Lagern die Verriegelung in einer bestimmten Lage die Folge, dass die Lager in der Startphase einseitig beansprucht werden, so dass entweder ihre Lebensdauer a priori verkürzt wird oder sie beträchtlich überdimensioniert werden müssen, was wiederum zu einer unerwünschten Massevermehrung führt. All diese Probleme können vermieden werden, wenn die Ausrichtvorrichtung so konzipiert ist, dass eine vollständige dynamische Auswuchtung vorhanden ist, da dadurch Verriegelungseinrichtungen für die Startphase überflüssig werden.

Im Hinblick auf die während der Startphase der Trägerrakete auftretenden Probleme ist es ferner besonders günstig, die Elektromotoren während dieser Startphase kurzzuschliessen, so dass sie in der Art einer Wirbelstrombremse wirken und sich die Ausrichtvorrichtung frei bewegen kann, wobei diese Bewegung durch die Wirbelstrombremse gedämpft ist. Bezüglich der Vorgänge während der Startphase wird auf die **US-A-4,451,729** verwiesen; diese Publikation befasst sich mit dem technologischen Hintergrund solcher Probleme, ohne jedoch die erfindungsgemässe Lösung nahezulegen.

Ein weiteres Problem, das sich während der Startphase manifestiert, besteht in der Gefahr der Verschmutzung durch verschiedene Partikel; dazu gehören unter anderem der Beschlag infolge von aus der Trägerrakete austretenden Verbrennungsgasen; besonders unangenehm wirkt sich eine Verschmutzung der Spiegel aus, und insgesamt sind die kältesten Stellen am verschmutzungsgefährdetsten. Nun ist es zwar aus der **FR-A1-2 690 532** bekannt, den Austrittsbereich des Sendestrahls bzw. den Eintrittsbereich des Empfangsstrahls mittels einer zylindrischen Blende, die sich ausgehend vom Elevationsspiegel um die Strahlen erstreckt, zu schützen. Diese Blende ist jedoch nur als Sonnenschutz bzw. Strahlungsschutz gegen unerwünschte Strahlung vorgesehen, kann aber die gefürchtete Verschmutzung während der Startphase der Trägerrakete keinesfalls verhindem. Das Verschmutzungsproblem kann jedoch beseitigt oder wenigstens stark vermindert werden, indem die Fläche der Endkontur der Blende während der Startphase der Trägerrakete abgedeckt wird.

Zu diesem Zweck kann ein später entfernbares Deckelelement vorgesehen sein, oder der entsprechende Bereich der Ausrichtvorrichtung wird verstellbar ausgebildet, so dass die entsprechende Fläche bzw. die Endkontur der Blende während der Verschmutzungsgefahr an einer geeigneten Fläche des Terminals anliegt; ggfs kann bei geeigneter Konzeption des Terminals zur Verstellung der ohnehin vorhandene Motor für die Elevationsachse verwendet werden.

Bezüglich der Probleme der Verschmutzung wird auf fie Publikation **'SOUT optical intersatellite communication terminal elegant breadboard'** von **Baister et al**, publiziert in IEE PROCEEDINGS J OPTOELECTRONlCS, Bd. 142, Nr. &, Dezember 1995, hingewiesen. Diese Publikation beleuchtet den technischen Hintergrund, ohne jedoch die erfindungsgemässe Lösung nahezulegen.

Wie schon erwähnt, wirkt das Terminal, an dem sich die Ausrichtvorrichtung befindet, mit einem Gegenterminal zusammen, das im allgemeinen gleich ausgebildet ist wie das Terminal, wobei sowohl das Terminal wie auch das Gegenterminal gleichzeitig Sendestrahlen emittieren und vom jeweils anderen Terminal emittierte Empfangsstrahlen empfangen. Die verschiedenen Phasen der Ausrichtung, die weiter oben mit Bezug auf das Terminal beschrieben wurden, spielen sich somit in entsprechender Weise auch beim Gegenterminal ab. Wie schon erwähnt, besteht die erste Phase der Ausrichtung des Terminals darin, einen Suchstrahl zu detektieren, der in einer Vorphase vom Gegenterminal emittiert wird. Natürlich spielt sich diese Emission eines Suchstrahls auch beim Terminal selbst ab. Die erste Phase besteht darin, eine ungefähre Ausrichtung zu erzielen, wobei der zu detektierende Strahl - oder ggfs. natürliche Lichtquellen wie Sternbilder - im allgemeinen in einem grossen Raumwinkel gesucht werden muss. Es liegt auf der Hand, dass der Vorgang des Suchens des eines Strahls erleichtert wird, wenn in dieser Vorphase vom Gegenterminal ein Suchstrahl, nämlich eine sogenannte Lichtbake, emittiert wird, deren abgestrahlte Leistung höher ist als diejenige der üblicherweise zur Datenübertragung benützten Strahlung.

Da die Emission einer solchen Lichtbake für den emittierenden Terminal selbst unter gewissen Umständen zu einer Rückstreuung und Selbstblendung führt, die man zu vermeiden trachtet, wird vorteilhaft eine Entflechtung der Wege der Lichtbake von den restlichen Strahlen vorgesehen, so dass die Lichtbake von einer ausserhalb des eigentlichen Strahlenweges liegenden Stelle abgeht. Um dies zu realisieren, ist eine gesonderte Lichtbakenoptik angeordnet, die mittels eines Lichtwellenleiters flexibel mit der abgesetzten Strahlungsquelle verbunden ist.

Die Lichtbakeneinrichtung sollte vorteilhafterweise eine Vorrichtung enthalten, um die bewegungsmässig mit dem ersten Spiegel solidarischen Leiter und die relativ dazu drehbaren, bewegungsmässig mit dem zweiten Spiegel solidarischen Leiter so zu verbinden, dass die Leitungen keinem Stress ausgesetzt sind. Zu diesem Zweck kann eine Lichtbakenleitertrommel vorgesehen sein.

Da die Zuverlässigkeit einzelner Lichtbaken im allgemeinen geringer ist als die Zuverlässigkeit anderer Bestandteile des Terminals, ist es empfehlenswert, die Lichtbakeneinrichtung so auszubilden, dass sie mindestens zwei Lichtbakeneinheiten aufweist, die altemativ verwendbar sind.

Zum Problemkreis der Lichtbaken wird auf die Publikation **'Mathematical modeling and simulation analysis of a pointing, acquisition, and tracking system for a laser-based intersatellite communication'** von **Skormin et al**, erschienen in OPTICAL ENGINEERING, 32 (1993) November, Nr. 11, hingewiesen. Es handelt sich hierbei um einen Laborbericht, jedoch nicht um eine vorbekannte konstruktive Realisation.

Weitere Einzelheiten und Vorteile der Erfindung werden im folgenden durch die Beschreibung eines bevorzugten Ausführungsbeispiel der erfindungsgemässen Ausrichtvorrichtung offenbart. Bei der Darlegung dieses Ausführungsbeispiels wird auf die Ausbildung und Wirkungsweise der gesamten Steuereinrichtungen nicht eingegangen. Es wird dazu auf die **CH-Patentanmeldungen Nr. 2987/96** und **Nr. 2905/96** verwiesen, in denen eine besonders vorteilhafte Steuereinrichtung bzw. der Betrieb des Terminals ausführlich beschrieben ist. Die Beschreibung des vorliegenden Ausführungsbeispiel erfolgt im Zusammenhang mit der Zeichnung; darin zeigt
- **Fig. 1A**: eine Ausrichtvorrichtung nach der Erfindung, in einem Schnitt durch die beiden Achsen;
- **Fig. 1B**: einen Schnitt längs der Linie I-I der Fig. 1A;
- **Fig. 2A**: einen massereduzierten Spiegel, von hinten;
- **Fig. 2B**: den in Fig. 2A dargestellten Spiegel in einem Schnitt längs der Linie II-II der Fig. 2A;
- **Fig. 3A**: die kardanische Aufhängung des in den Fig. 2A und 2B dargestellten Spiegels, zusammen mit der Aktuatorvorrichtung, in explodierter Darstellung;
- **Fig. 3B**: die in Fig. 3A dargestellte kardanische Aufhängung mit der Aktuatorvorrichtung, in montiertem Zustand, in einem Schaubild;
- **Fig. 3C**: die in den Fig. 3A und 3B dargestellte kardanische Aufhängung mit der Aktuatorvorrichtung, von der Aktuatorseite gesehen;
- **Fig. 3D**: die in den Fig. 3A - 3C dargestellte kardanische Aufhängung mit der Aktuatorvorrichtung, in einem Schnitt quer zum Spiegel; und
- **Fig. 4**: die zweite Dreheinheit mit einer Blende in zwei verschiedenen Lagen.

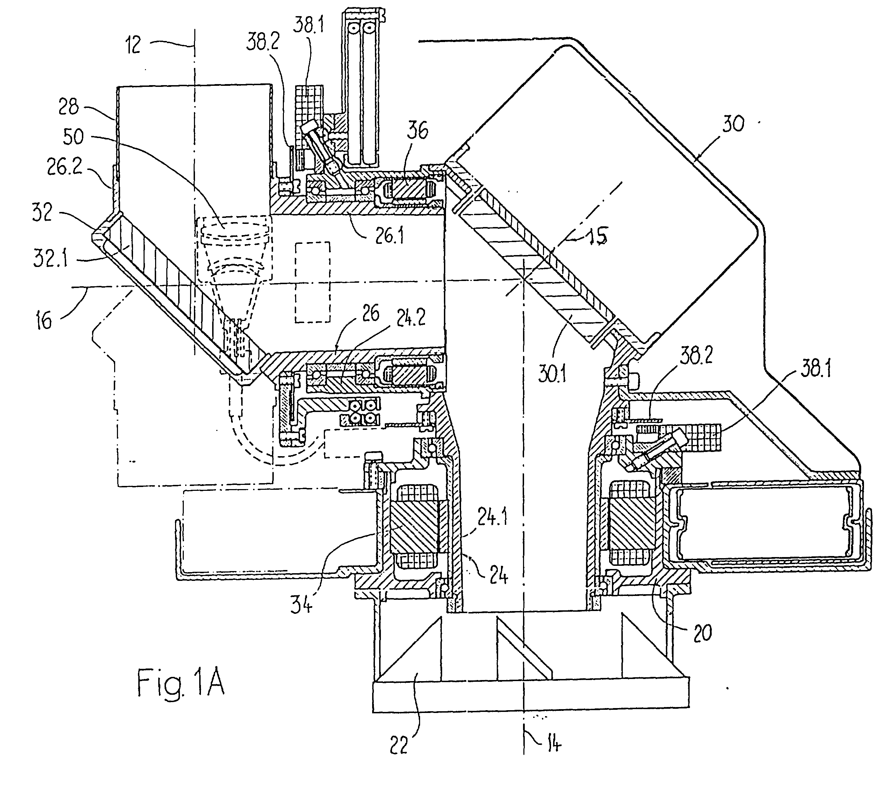

**Fig. 1A** stellt eine Ausrichtvorrichtung **10** für ein weiter nicht dargestelltes Terminal dar, das dazu bestimmt ist, mittels einer Trägerrakete auf eine Umlaufbahn im Weltraum gebracht zu werden, um dort zur optischen Datenübertragung Verwendung zu finden. Die Ausrichtvorrichtung **10** dient zur Ausrichtung eines Sendestrahls auf einen von einem Gegenterminal emittierten Empfangsstrahl, dessen Achse mit **12** bezeichnet ist. Unter dem Begriff Ausrichtung werden im Rahmen der vorliegenden Beschreibung alle vorkommenden Ausrichtvorgänge verstanden, also der anfängliche Aquisitionsvorgang zur Erkennung des Empfangsstrahls und der Vorgang zur Verbesserung und Perfektionierung der Strahlausrichtung; diese beiden Vorgänge laufen vor dem Beginn der Datenübertragung ab. Ebenfalls zur Ausrichtung im Sinne der vorliegenden Beschreibung gehören die Vorgänge der Nachführens, durch welche Abweichungen von der einmal erreichten Strahlausrichtung während der eigentlichen Datenübertragung kompensiert werden.

Die erfindungsgemässe Ausrichtvorrichtung ist in der Art eines Periskops ausgebildet und wirkend. Die Ausrichtung erfolgt um zwei orthogonale Achsen, wobei in Anlehnung an die im Geschütz- und Raketenbereich übliche Terminologie die in **Fig. 1A** vertikale Achse als Azimuthachse **14** und die in Fig. **1A** horizontale Achse als Elevationsachse **16** bezeichnet ist. Die Ausrichtvorrichtung **10** weist eine im Rahmen der vorliegenden Beschreibung als fest angenommene Struktur **20** auf, an welcher eine ebenfalls zum Terminal gehörende optische Bank **22** befestigt ist. Eine zur Verwendung mit der vorliegenden Ausrichtvorrichtung **10** geeignete optische Bank ist der **CH-Patentanmeldung Nr. 2897/96** beschrieben.

Innerhalb eines vertikalen Abschnitts **20.1** der Struktur **20** ist ein vertikaler Abschnitt **24.1** einer ersten Dreheinheit **24** angeordnet, welche um die Azimuthachse **14** drehbar ist. Die Dreheinheit **24** weist femer einen zur Horizontalen abgekröpften Abschnitt **24.2** auf, dessen Längsachse durch die Elevationsachse **26** gebildet ist. Im Inneren dieses horizontalen Abschnitts **24.1** der ersten Dreheinheit **24** ist ein horizontaler Abschnitt **26.1** einer zweiten Dreheinheit **26** angeordnet, der zusammen mit der ersten Dreheinheit **24** um die Azimuthachse **14** und relativ zur ersten Dreheinheit **24** um die Elevationsachse **16** drehbar ist. Der horizontale Abschnitt **26.1** des zweiten Drehteils **26** ist, anders als bei der aus dem Stand der Technik vorbekannten Ausrichtvorrichtung, sehr kurz, dadurch vermindert sich die exzentrisch und in relativ grossem Abstand von der Azimuthachse **14** befindliche Masse, welche - wie später beschrieben - um die Azimuthachse **14** gedreht wird, was aus festigkeitsmässigen und dynamischen Gründen vorteilhaft ist. Aus denselben Gründen sind die schweren Bauteile der zweiten Dreheinheit **26**, zu welchen ein später genauer beschriebener Motor **34** gehört, möglichst nahe an der Azimuthachse **14** angeordnet. An den horizontalen Abschnitt **26.1** der zweiten Dreheinheit **26** schliesst sich ein kurzer, vertikal abgekröpfter Abschnitt **26.2** an, dessen Achse im wesentlichen mit der Achse **12** zusammenfällt. An diesem vertikalen Abschnitt **26. 2** ist in koaxialer Anordnung eine hohlzylindrische Blende **28** befestigt. An der ersten Dreheinheit **24** ist eine erste Spiegeleinheit befestigt, welche im weiteren als Azimuthspiegeleinheit **30** bezeichnet ist. Die Azimuthspiegeleinheit **30** besitzt einen ersten Spiegel, der im weiteren als Azimuthspiegel **30.1** bezeichnet ist, dessen Mittelnormale mit **15** bezeichnet ist und dessen spiegelnde Fläche schräg nach unten gerichtet ist und sowohl mit der Azimuthachse **14** wie auch mit der Elevationsachse **16** je einen Winkel von mindestens annähernd 45° einschliesst. An der zweiten Dreheinheit **26** ist eine weitere Spiegeleinheit, die als Elevationsspiegeleinheit **32** bezeichnet ist, befestigt. Die Elevationsspiegeleinheit **32** besitzt einen zweiten Spiegel, der als Elevationsspiegel **32.1** bezeichnet ist, dessen spiegelnde Fläche schräg nach oben gerichtet ist und sowohl mit der Elevationsachse **16** als auch mit der Achse **12** einen Winkel von mindestens annähemd 45° einschliesst.

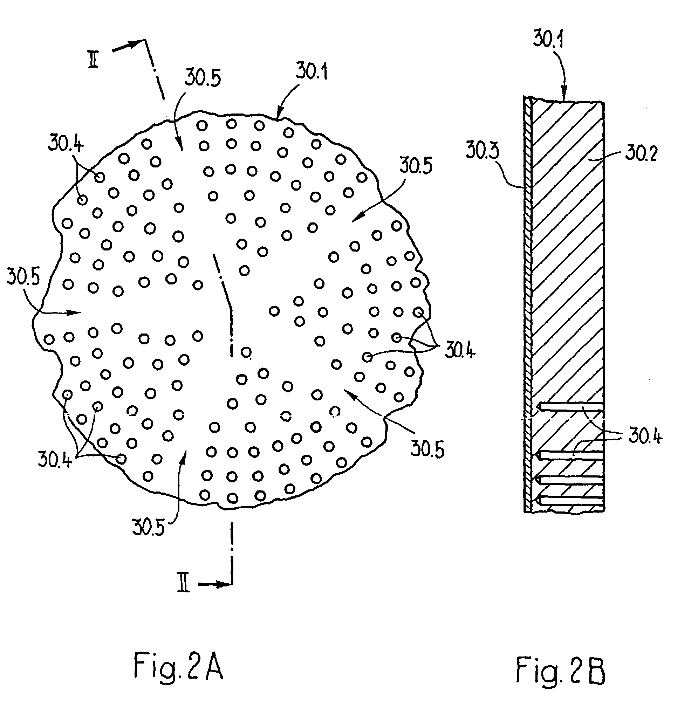

Die **Fig. 2A** und **2B** zeigen den massereduzierten Azimuthspiegel **30.1**, der durch ein plattenförmiges Substrat **30.2** mit einer spiegelnden Schicht **30.3** gebildet ist. Aus **Fig. 2B** ist ersichtlich, dass das plattenförmige Substrat **30.2** Ausnehmungen, ausgehend von der der spiegelnden Fläche **30.3** gegenüberliegenden Fläche, besitzt, die sich nahezu über die gesamte Dicke des plattenförmigen Substrates **30.2** erstrecken. **Fig. 2B** zeigt, dass die Ausnehmungen **30.4** so angeordnet sind, dass zwischen ihnen ausnehmungsfreie Zonen **30.5** vorhanden sind, welche eine tragende Spiegelstruktur bilden. Der Elevationsspiegel **36,1** ist in gleicher oder ähnlicher Weise massereduziert ausgebildet wie der Azimuthspiegel **30.1**.

Zur stressfreien Verbindung von nicht dargestellten Leitungen an der Struktur **20** mit ebenfalls nicht dargestellten Leitungen, die bewegungsmässig mit der ersten Dreheinheit **24** solidarisch sind, eignet sich eine Leitungsverbindung, wie sie in der **CH-Patentanmeldung Nr. 2896/96** beschrieben ist.

Ein erster Motor **34** dient zum direkten, kontinuierlichen Antrieb der ersten Dreheinheit **24** relativ zur Struktur **20**, wobei die relativ schweren Bauteile an der Struktur **20** angeordnet sind, so dass nur die relativ leichteren Bauteile bewegt werden müssen. Der schon erwähnte zweite Motor **36** dient zum direkten, kontinuierlichen Antrieb der zweiten Dreheinheit **26**.

Beide Motoren **34, 36** sind drehmomentkonstante Motoren und erlauben somit eine kontinuierliche Rotation.

Zur Erfassung der jeweiligen Lage bzw. der Drehung der ersten Dreheinheit **24** ist eine Kodiereinrichtung **38** vorgesehen, von welcher ein erstes Element **38.1** an der Struktur **20** und ein zweites Element **38.2** am vertikalen Abschnitt **24.1** der ersten Dreheinheit **24** befestigt ist. Dem entsprechenden Zweck für die zweite Dreheinheit **26** dient eine zweite Kodiereinrichtung **40**, von welcher ein erstes Element **40.1** am horizontalen Abschnitt **24.2** der ersten Dreheinheit **24** und ein zweites Element **40.2** am horizontalen Element **26.1** der zweiten Dreheinheit **26** befestigt ist.

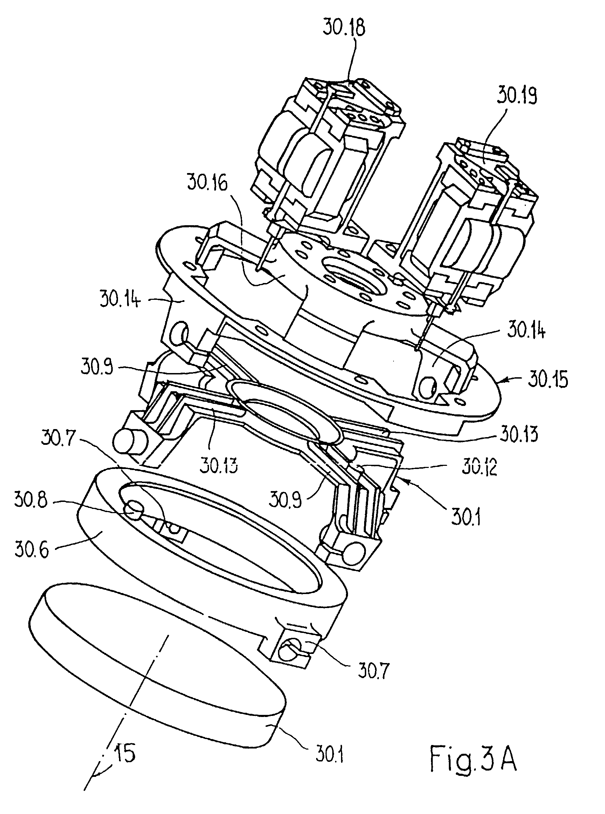

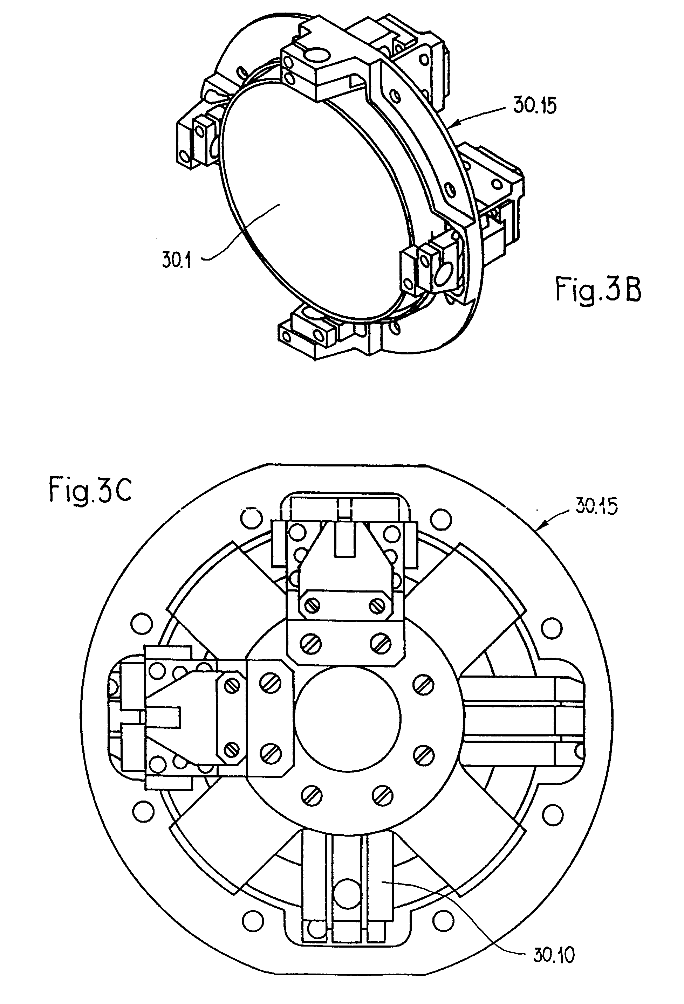

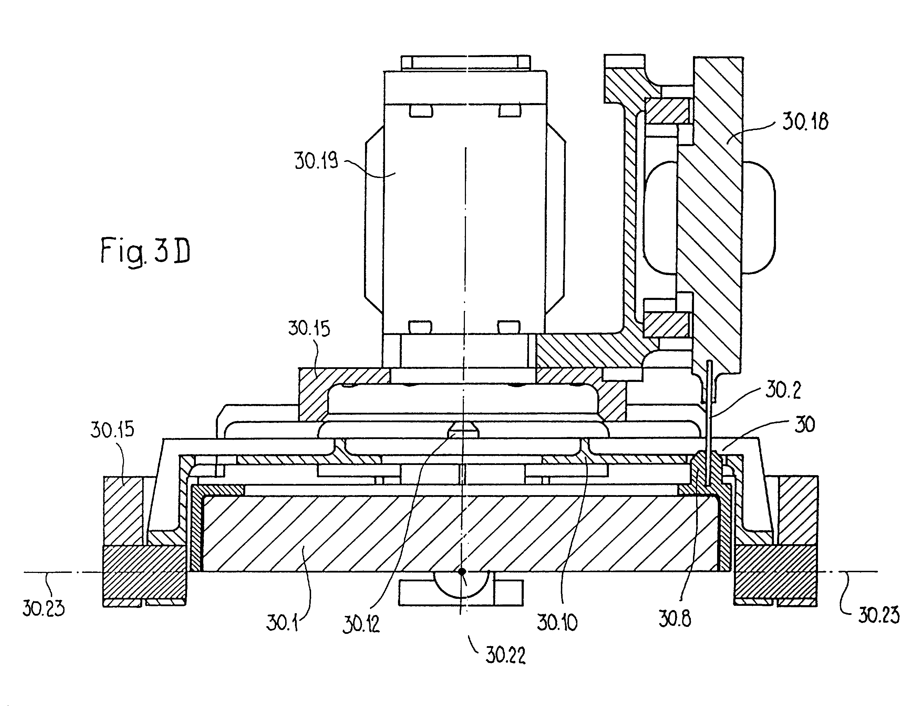

Die Figuren **3A - 3D** zeigen die Azimuthspiegeleinheit **30** in Einzelheiten. Der Azimuthspiegel **30.1**, welcher vereinfacht als Scheibe mit der Mittelnormalen **15** dargestellt ist, ist in einer kreisringförmigen Spiegelfassung **30.6** aufgenommen. Diese weist zwei diametral angeordnete Ansätze **30.7** und eine Nase **30.8** auf. Die Ansätze **30.7** der Spiegelfassung **30.6** sind drehbar über zwei diametralen Arme **30.9** eines Kardankreuzes **30.10** mit dem letzteren verbunden. Einer der Arme des Kardankreuzes **30.1** weist eine Nase **30.12** auf, die im wesentlichen gleich ausgebildet ist wie die Nase **30.8** der Spiegelfassung **30.6**. das Kardankreuz **30.10** ist über zwei weitere, je mittig zwischen den Armen **30.9** angeordnete Arme **30.13** drehbar mit Ansätzen **30.14** eines Kardanringes **30.15** verbunden. Ein Mittelteil **30.16** dieses Kardanringes **30.15** ist über vier abgekröpfte Verbindungsstege **30.17** befestigt und dient als Befestigungsplattform für zwei Aktuatoren **30.18, 30.19**. In **Fig. 3A** sind die Aktuatoren aus ihrer Arbeitsstellung gemäss **Fig. 3C** weggedreht, damit der Mittelteil **30.16** des Kardanringes **30.15** besser sichtbar ist. Die Aktuatoren **30.18**, **30.19** und der Kardanring **30.15** sind bewegungsmässig mit der ersten Dreheinheit **24** solidarisch, das Kardankreuz **30.10** ist relativ zum Kardanring **30.15** dreh- bzw. kippbar und die Spiegelfassung **30.6** ist relativ zum Kardankreuz **30.10** dreh- bzw. kippbar. Wie aus der geschnittenen Darstellung gemäss **Fig. 3D** ersichtlich, ist ein vom dort rechts dargestellten Aktuator ausgehender, durch diesen Aktuator auf- und abbewegbarer Draht **30.20** in der Nase **30.8** der Spiegelfassung **30.6** befestigt. In gleicher Weise ist ein vom anderen Aktuator ausgehender, nicht dargestellter, ebenfalls auf- und abbewegbarer Draht in der Nase **30.12** des Kardankreuzes **30.10** befestigt. Bewegungen des Drahtes **30.2** haben zur Folge, dass die Spiegelfassung **30.6** eine Drehbewegung um die Achse **30.22** durchführt, die in der geschnittenen Darstellung als Punkt erscheint. Bewegungen des nicht dargestellten Drahtes haben zur Folge, dass sich das Kardankreuz **30.10** um die Achse **30.23** dreht. Infolge der massereduzierten Ausführung des Azimuthspiegels **30.1** sowie infolge der Leichtbauausbildung der gesamten kardanischen Spiegelaufhängung ist es möglich, mit nur zwei Aktuatoren auszukommen, wobei allerdings der Draht **30.20** und der nicht dargestellte Draht so dimensioniert sein müssen, dass sie nicht nur auf Zug beanspruchbar sind. Anstelle von Drähten können daher ggfs. dünne Platten oder Röhrchen verwendet werden.

Eine weitere mögliche Ausführungsform, die für symmetrische Anregung des Azimuthspiegels **30.1** sorgt, weist den Vorteil auf, dass sie signifikant die Kreuzkupplung zwischen den beiden Achsen reduziert.

Die gesamte oben beschriebene Anordnung dient dazu, dass bei optimaler Ausrichtung ein von der optischen Bank **22** ausgehender Sendestrahl bzw. dessen Längsmittelachse im wesentlichen längs der Azimuthachse **14**, dann nach Reflexion am Azimuthspiegel **30.1** längs der Elevationsachse **16** und nach einer weiteren Reflexion am Elevationsspiegel **32.1** längs der Achse **12** verläuft, während ein von einem Gegenterminal emittierter, für das vorliegende Terminal bestimmter Empfangsstrahl den umgekehrten Weg nimmt. Diese optimale Ausrichtung ist eine Voraussetzung für eine einwandfreie Datenübertragung.

Die Ausrichtung zerfällt in eine Grobausrichtung und in eine Feinausrichtung, wobei im allgemeinen die Grobausrichtung zu Beginn des Verbindungsaufbaus stattfindet, während die Feinausrichtung während der Endphase des Verbindungsaufbaus sowie nach dem Verbindungsaufbau während der Datenübertragung stattfindet.

Die Grobausrichtung erfolgt durch die Bewegung der beiden Dreheinheiten **24, 26**, wobei es je nach Konstellation von Terminal und Gegenterminal auch möglich ist, dass nur eine der Dreheinheiten **24, 26** bewegt werden muss oder dass sich eine Grobeinstellung erübrigt. Durch die erforderliche eher langsame und kontinuierlich ablaufende Drehung der Dreheinheiten **24, 26** um ihre Achsen **14, 16** gelangen der Azimuthspiegel **30.1** und der Elevationsspiegel **32.1** in Stellungen, in welcher zwar keine perfekte, jedoch eine gut angenäherte Ausrichtung des Sendestrahls auf den Empfangsstrahl vorhanden ist. Diesen Ausrichtvorgang, der sich innerhalb eines grossen Raumwinkels im Bereich einer Hemisphäre abspielt, bezeichnet man als Grobausrichtung. Man erreicht damit eine Ausrichtungsgenauigkeit auf einen sehr kleinen Raumwinkel im Bereich von ca. plus/minus 0.1° oder weniger.

Innerhalb dieses kleinen Raumwinkels erfolgt dann die Feineinstellung durch die erforderliche Verkippung des Azimuthspiegels **30.1** um seine Mittelnormale **15**. Die Bewegung des Azimuthspiegels **30.1** muss somit nur innerhalb enger Grenzen, entsprechend dem kleinen Raumwinkel von maximal plus/minus 0.1° stattfinden, jedoch mit der Möglichkeit, mechanisch hochfrequente kompensatorische Schwingungen durchzuführen, dies, um die Nachführung während der Datenübertragung bei Schwingungen des Gegenterminals und damit des Empfangsstrahls zu gewährleisten, wobei es aber nicht ausgeschlossen ist, dass auch während der Datenübertragung Abweichungen von der optimalen Ausrichtung stattfinden, die ausserhalb des erwähnten Raumwinkelbereichs der Feineinstellung liegen und die somit eine Betätigung der Grobeinstellung erfordern.

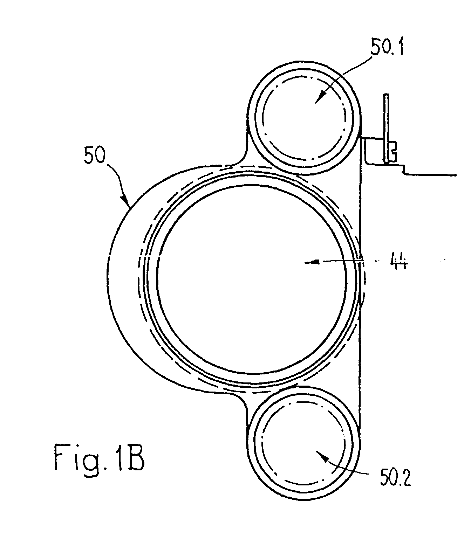

Eine Leuchtbakeneinrichtung **50** ist gemäss **Fig. 1B** zur Emission eines initialen Suchstrahles für das Gegenterminal vorgesehen, dessen Ausgangsleistung bedeutend über der Ausgangsleistung der sonst emittierten Strahlen liegt, und der daher vom Gegenterminal leicht detektierbar ist. Der initiale Suchstrahl wird ab dem Beginn der weiter oben beschriebenen Grobausrichtung emittiert und erleichtert den Beginn der Grobausrichtung des Gegenterminals. Die Leuchtbakeneinrichtung **50** befindet sich, wie am besten aus **Fig. 1B** ersichtlich, ausserhalb eines Bereichs **44**, der für die üblichen Strahlen vorgesehen ist, wodurch Rückspiegelungen und Blendungen im Bereich des üblichen Strahlenraums vermieden werden. Eine separate Anordnung der Leuchtbakeneinrichtung empfiehlt sich auch aus thermischen Gründen. Bei einer Darstellung gemäss **Fig. 1A** und **1B** befindet sich ein erster Leuchtbakenemitter **50.1** hinter, ein zweiter Leuchtbakenemitter **50.2** vor der Elevationsspiegeleinheit **32**, dem vertikalen Abschnitt **26.2** der zweiten Dreheinheit **26** und der hohlzylindrischen Blende **28**. Die Anordnung von mindestens zwei Leuchtbakeneinheiten empfiehlt sich wegen der Störungsanfälligkeit derselben und aus Gründen der angestrebten dynamischen Auswuchtung.

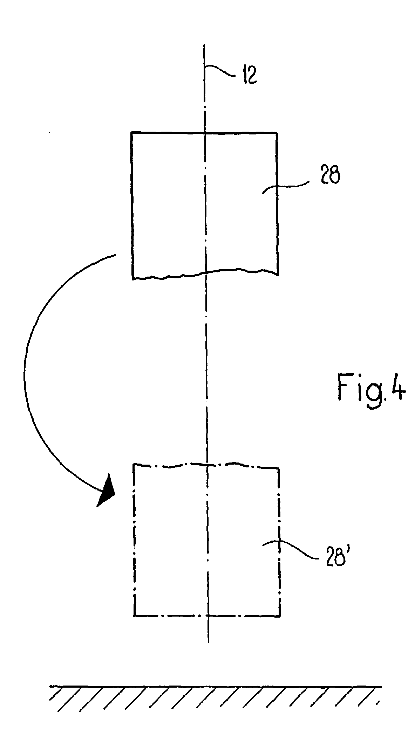

**Fig. 4** zeigt den Abschnitt **26.2** der zweiten Dreheinheit **26** und die Blende **28**, die in **Fig. 1A** vertikal nach oben ragen, in einer anderen Lage, in welcher sie vertikal nach unten gedreht sind. Während der Startphase der Trägerrakete wird der Abschnitt **26.2** in diese Lage gedreht, in welcher sich die Endkontur der Blende **28** möglichst nahe an einer Wandung **60** befindet, um eine Verschmutzung des Inneren der Ausrichtvorrichtung **10** durch Treibgasbeschlag und andere Partikel zu vermeiden.

Weitere wesentliche Einzelheiten sind aus den Figuren zu entnehmen und bedürfen keiner zusätzlichen Erklärungen.

## Patentansprüche

1. Ausrichtvorrichtung (**10**) zum Ausrichten eines optischen Sendestrahles auf optischen einen optischen Empfangsstrahl,
- mit einer Grobausrichtvorrichtung, umfassend
- einen ersten, um eine erste Achse (**14**) und relativ zu einer optischen Einheit (**22**) drehbaren Spiegel (**30.1**), der unter einem Winkel von mindestens annähernd 45° zur ersten Achse (**14**) steht,
- einen zweiten, um eine quer zur ersten Achse gerichteten zweite Achse (**16**) drehbaren Spiegel (**32.1**), der unter einem Winkel von mindestens annähernd 45° zur zweiten Drehachse (**16**) steht,
- wobei die zweite Achse (**16**) um die erste Achse (**14**) drehbar ist, um den zweiten Spiegel (**32.1**) innerhalb eines Raumwinkels im Bereich einer Hemisphäre zu bewegen, und
- mit einer Feinausrichtvorrichtung, umfassend
- eine kippbare Lagerungsvorrichtung (**30.6 - 30.17**) für mindestens einen der Spiegel (**30.1**), um diesen kippbar zu befestigen und
- eine Aktuatorvorrichtung (**30.18 - 30.21**), um den genannten kippbaren Spiegel (**30.1**) relativ seiner Mittelnormalen (**15**) innerhalb eines Raumwinkels, der wesentlich kleiner ist als die Hemisphäre, zu verkippen,
**dadurch gekennzeichnet**,
dass mindestens der kippbar befestigte Spiegel (**30.1**) massereduziert ausgebildet ist, wobei er aus einer spiegelnden Schicht (**30.3**) und einem diese Schicht (**30.3**) tragenden Substrat (**30.1**) besteht, welches Substrat (**30.1**) durch eine Einzelplatte gebildet wird, die eine Vielzahl von runden Ausnehmungen (**30.4**) aufweist, welche von der der spiegelnden Schicht (**30.3**) gegenüberliegenden Fläche des Substrats (**30.1**) ausgehen und so angeordnet sind,
dass zwischen den Ausnehmungen (**30.4**) ausnehmungsfreie, eine tragende Spiegelstruktur bildende Zonen (**30.5**) vorhanden sind.

2. Ausrichtvorrichtung (**10**) nach Patentanspruch **1**,
**dadurch gekennzeichnet**,
dass der kippbar befestigte Spiegel der erste Spiegel (**30.1**) ist.

3. Ausrichtvorrichtung (**10**) nach einem der Patentansprüche **1 - 2**,
**dadurch gekennzeichnet**,
dass der erste Spiegel (**30.1**) auf einer ersten Dreheinheit (**24**) und der zweite Spiegel (**32.1**) auf einer zweiten Dreheinheit (**26**) angeordnet sind, und dass zum Direktantrieb der Dreheinheiten (**24, 26**) je ein drehmomentkonstanter Motor vorgesehen ist.

4. Ausrichtvorrichtung (**10**) nach einem der Patentansprüche **1 - 4**,
**dadurch gekennzeichnet**,
dass sie dynamisch ausgewuchtet ist, um während der Startphase einer Trägerrakete, welche dazu bestimmt ist, einen mit der Ausrichtvorrichtung versehenen Terminal in den Weltraum zu transportieren, verriegelungsfrei zu sein.

5. Ausrichtvorrichtung (**10**) nach einem der Patentansprüche **1-4**, **dadurch gekennzeichnet** dass, der kippbare Spiegel (**30.1**) in einer Kardaneinrichtung (**30.6 - 30.17**) aufgenommen ist.

6. Ausrichtvorrichtung (**10**) nach Patentanspruch **4** und **5**,
**dadurch gekennzeichnet,**
dass die Motoren (**34, 36**) kurzschliessbar sind, um während der Startphase der Trägerrakete als Wirbelstrombremse zu wirken.

7. Ausrichtvorrichtung (**10**) nach einem der Patentansprüche **1 - 6,**
**dadurch gekennzeichnet**,
dass die zweite Dreheinheit (**26**) in eine Lage drehbar ist, in welcher ihr Endquerschnitt mindestens annähernd durch eine Fläche abgedeckt ist, um eine Verschmutzung des Inneren der Ausrichtvorrichtung (**10**) zu vermeiden. (**Fig. 4**).

8. Ausrichtvorrichtung (**10**) nach einem der Patentansprüche **1 - 7**,
**dadurch gekennzeichnet,**
dass die zweite Dreheinheit (**26**) bzw. eine an sie anschliessende hohlzylindrischen Blende (**28**) einen Deckel (**26.3**) besitzt, der in eine Wirklage zum Abdecken des zweiten Spiegels (**32.1**) schwenkbar ist.

9. Ausrichtvorrichtung (**10**) nach einem der Patentansprüche **1 - 10**
**dadurch gekennzeichnet,**
dass sie eine Lichtbakeneinrichtung (**50**) besitzt zur Emission eines zur Detektierung durch ein Gegenterminal bestimmten Suchstrahls, dessen abgestrahlte Leistung grösser ist als die Leistung für eine optische Datenübertragung.

10. Ausrichtvorrichtung (**10**) nach Patentanspruch **9**,
**dadurch gekennzeichnet,**
dass die Lichtbakeneinrichtung (**50**) einen Austrittsteil besitzt, der an der zweiten Dreheinheit (**26**) ausserhalb des Raums der Empfangs- und Sendestrahlen angeordnet ist.

11. Ausrichtvorrichtung (**10**) nach Patentanspruch **10**,
**dadurch gekennzeichnet,**
dass zur Verbindung von mit der ersten Dreheinheit (**24**) solidarischen Leitern und von mit der Lichtbakeneinrichtung (**50**) solidarischen Leitern für die Lichtbakeneinrichtung (**50**) eine an der zweiten Dreheinheit (**26**) angeordnete Lichtleitertrommel (**50.3**) vorgesehen ist.

12. Ausrichtvorrichtung (**10**) nach Patentanspruch **11**,
**dadurch gekennzeichnet,**
dass die Lichtbakeneinrichtung (**50**) mindestens zwei Lichtbakeneinheiten (**50.1, 50.2**) aufweist.

13. Ausrichtvorrichtung (**10**) nach mindestens einem der Patentansprüche **1 - 12**,
**dadurch gekennzeichnet,**
dass sie eine beispielsweise triangulatorische Einrichtung zur Erfassung von durch natürliche Lichtquellen emittierter Strahlung und zur Berechnung der Ausrichtung aufgrund der erfassten Strahlung umfasst.

## Claims

1. Pointing apparatus (10) for pointing an optical emit beam at an optical receive beam,
- having a coarse pointing mechanism comprising
- a first mirror (30.1) which is adapted to rotate about a first axis (14) and relative to an optical unit (22), and which is at an angle of at least approximately 45° to the first axis (14),
- a second mirror (32.1) which is adapted to rotate about a second axis (16) directed at right angles to the first axis, and which is at an angle of at least approximately 45° to the second axis of rotation (16),
- the second axis (16) being adapted to rotate about the first axis (14) in order to move the second mirror (32.1) within a solid angle in the region of a hemisphere, and
- having a fine pointing mechanism comprising
- a tilting mounting mechanism (30.6 - 30.17) for at least one of the mirrors (30.1) in order to fix the latter in a tiltable manner, and
- an actuator mechanism (30.18 - 30.21) in order to tip over said tilting mirror (30.1) relative to its mid-normal line (15) within a solid angle that is far smaller than the hemisphere,
**characterised in that**
at least the tiltably fixed mirror (30.1) is a construction of reduced mass, consisting of a reflective layer (30.3) and a substrate (30.1) bearing said layer (30.3), which substrate (30.1) is formed by a single panel incorporating a large number of round recesses (30.4) which start from the surface of the substrate (30.1) that is situated opposite the reflective layer (30.3) and are arranged in such a way that between the recesses (30.4) there are recess-free zones (30.5) which constitute a supporting mirror structure.

2. Pointing apparatus (10) according to claim 1,
**characterised in that**
the tiltably fixed mirror is the first mirror (30.1).

3. Pointing apparatus (10) according to either of claims 1 and 2,
**characterised in that**
the first mirror (30.1) is arranged on a first rotary unit (24) and the second mirror (32.1) is arranged on a second rotary unit (26), and that a constant-torque motor is provided to directly drive the rotary units (24, 26).

4. Pointing apparatus (10) according to any of claims 1 to 4,
**characterised in that**
it is dynamically balanced so as to be interlock-free during the launch phase of a carrier rocket intended to transport a terminal equipped with the pointing apparatus into space.

5. Pointing apparatus (10) according to any of claims 1 to 4,
**characterised in that**
the tilting mirror (30.1) is accommodated in a gimbal device (30.6 - 30.17).

6. Pointing apparatus (10) according to claims 4 and 5,
**characterised in that**
the motors (34, 36) can be short-circuited in order to operate as an eddy current brake during the launch phase of the carrier rocket.

7. Pointing apparatus (10) according to any of claims 1 to 6,
**characterised in that**
the second rotary unit (26) is adapted to be rotated into a position in which its end cross-section is at least more or less covered by a surface in order to prevent contamination of the interior of the pointing apparatus (10) (Fig. 4).

8. Pointing apparatus (10) according to any of claims 1 to 7,
**characterised in that**
the second rotary unit (26), or rather a hollow cylindrical diaphragm (28) contiguous therewith, has a cover (26.3) which is adapted to be swivelled into an operative position for covering the second mirror (32.1).

9. Pointing apparatus (10) according to any of claims 1 to 8,
**characterised in that**
it has a light beacon device (50) for emitting a search beam which is designed to be detected by an opposite terminal and the power emitted by which is greater than the power for an optical data transmission.

10. Pointing apparatus (10) according to claim 9,
**characterised in that**
the light beacon device (50) has an exit section which is arranged on the second rotary unit (26) outside the area of the receive and emit beams.

11. Pointing apparatus (10) according to claim 10,
**characterised in that**
arranged on the second rotary unit (26) is a lightguide drum (50.3) which is provided to connect lightguides that are integral to the first rotary unit (24) and lightguides that are integral to the light beacon device (50) for the light beacon device (50).

12. Pointing apparatus (10) according to claim 11,
**characterised in that**
the light beacon device (50) has at least two light beacon units (50.1, 50.2).

13. Pointing apparatus (10) according to at least one of claims 1 to 12,
**characterised in that**
it contains a device, for example triangulational, for detecting radiation emitted by natural light sources and for computation of the pointing on the basis of the radiation detected.

## Revendications

1. Dispositif d'alignement (10) pour aligner un rayon optique émis sur un rayon optique reçu,
- avec un dispositif d'alignement grossier, comprenant
- un premier réflecteur (30.1), qui est rotatif autour d'un premier axe (14) et par rapport à une unité optique (22), et qui se trouve sous un angle d'au moins approximativement 45° par rapport au premier axe (14),
- un deuxième réflecteur (32.1), qui est rotatif autour d'un deuxième axe (16) orienté transversalement au premier axe, et qui se trouve sous un angle d'au moins approximativement 45° par rapport au deuxième axe (16),
- le deuxième axe (16) étant rotatif autour du premier axe (14), afin de déplacer le deuxième réflecteur (32.1) à l'intérieur d'un angle solide dans la région d'un hémisphère, et
- avec un dispositif d'alignement fin, comprenant
- un dispositif de montage basculant (30.6 - 30.17) pour au moins un des réflecteurs (30.1), afin de fixer ce réflecteur à basculement, et
- un dispositif d'actionnement (30.18 - 30.21), pour faire basculer le réflecteur basculant précité (30.1), par rapport à sa normale en son milieu, à l'intérieur d'un angle solide qui est nettement plus petit que l'hémisphère,
**caractérisé** en ce qu'au moins le réflecteur (30.1) fixé à basculement est réalisé avec une masse réduite, et il est constitué d'une couche réfléchissante (30.3) et d'un support (30.1) portant cette couche (30.3), le support (30.1) étant formé par une plaque individuelle qui comporte une pluralité d'évidements ronds (30.4), qui partent de la face du support (30.1) qui est opposée à la couche réfléchissante (30.3) et sont disposés de telle sorte que des zones (30.5) dépourvues d'évidements, constituant une structure porteuse de réflecteur, sont présentes entre les évidements (30.4).

2. Dispositif d'alignement (10) selon la revendication 1, **caractérisé** en ce que le réflecteur fixé à basculement est le premier réflecteur (30.1).

3. Dispositif d'alignement (10) selon la revendication 1 ou 2, **caractérisé** en ce que le premier réflecteur (30.1) est disposé sur une première unité tournante (24) et le deuxième réflecteur (32.1) sur une deuxième unité tournante (26), et en ce qu'un moteur à couple constant respectif est prévu pour l'entraînement direct des unités toumantes (24, 26).

4. Dispositif d'alignement (10) selon l'une des revendications 1 à 3, **caractérisé** en ce qu'il est équilibré dynamiquement afin d'être exempt de verrouillage pendant la phase de lancement d'une fusée porteuse qui est destinée à transporter dans l'espace extra-atmosphérique un terminal pourvu du dispositif d'alignement.

5. Dispositif d'alignement (10) selon l'une des revendications 1 à 4, **caractérisé** en ce que le miroir basculant (30.1) est reçu dans un dispositif à la Cardan (30.6 - 30.17).

6. Dispositif d'alignement (10) selon les revendications 4 et 5, **caractérisé** en ce que les moteurs (34, 36) peuvent être court-circuités, afin d'agir comme freins à courants de Foucault pendant la phase de lancement de la fusée porteuse.

7. Dispositif d'alignement (10) selon l'une des revendications 1 à 6, **caractérisé** en ce que la deuxième unité tournante (26) peut être tournée dans une position dans laquelle sa section terminale est au moins approximativement recouverte par une surface, afin d'éviter un encrassement de l'intérieur du dispositif d'alignement (10) (figure 4).

8. Dispositif d'alignement (10) selon l'une des revendications 1 à 7, **caractérisé** en ce que la deuxième unité tournante (26), ou encore un cache cylindrique creux (28) se raccordant à cette unité, possède un couvercle (26.3) qui peut être pivoté dans une position fonctionnelle pour recouvrir le deuxième réflecteur (32.1).

9. Dispositif d'alignement (10) selon l'une des revendications 1 à 8, **caractérisé** en ce qu'il possède un système de balise lumineuse (50) pour émettre un rayon de recherche destiné à être détecté par un terminal complémentaire, rayon dont la puissance émise est supérieure à la puissance pour une transmission optique de données.

10. Dispositif d'alignement (10) selon la revendication 9, **caractérisé** en ce que le système de balise lumineuse (50) possède une partie de sortie qui est disposée sur la deuxième unité tournante (26) en dehors de l'espace des rayons reçus et émis.

11. Dispositif d'alignement (10) selon la revendication 10, **caractérisé** en ce qu'il est prévu, pour relier des conducteurs solidaires de la première unité tournante (24) et des conducteurs solidaires du système de balise lumineuse (50), un tambour (50.3) de conducteurs de lumière disposé sur la deuxième unité tournante (26).

12. Dispositif d'alignement (10) selon la revendication 11, **caractérisé** en ce que le système de balise lumineuse (50) comporte au moins deux unités de balise lumineuse (50.1, 50.2).

13. Dispositif d'alignement (10) selon au moins une des revendications 1 à 12, **caractérisé** en ce qu'il comprend un dispositif, de triangulation par exemple, pour détecter le rayonnement émis par des sources naturelles de lumière et calculer l'alignement sur la base du rayonnement détecté.
